# EUROPÄISCHE PATENTSCHRIFT

(11) **EP 3 011 228 B1**
(45) Veröffentlichungstag und Bekanntmachung des Hinweises auf die Patenterteilung: **12.07.2017**
(21) Anmeldenummer: 14727407.0
(22) Anmeldetag: 27.05.2014
(51) Int. Cl.: F21S 8/10, C03B 11/08, B29D 11/00, G02B 19/00, F21V 8/00

(54) **OPTISCHES ELEMENT FÜR EINEN FAHRZEUGSCHEINWERFER**
OPTICAL ELEMENT FOR A VEHICLE HEADLIGHT
ÉLÉMENT OPTIQUE POUR PHARE DE VÉHICULE

(30) Priorität: 18.06.2013 DE 102013010112; 12.03.2014 DE 102014003526; 15.05.2014 DE 102014007185
(43) Veröffentlichungstag der Anmeldung: 27.04.2016
(73) Patentinhaber: Docter Optics SE, 07806 Neustadt an der Orla (DE); ZKW Group GmbH, 3250 Wieselburg (AT)
(72) Erfinder: TAUDT, Lukas, 3250 Wieselburg (AT); MOSER, Andreas, 3350 Haag (AT); WINTZER, Wolfram, 07749 Jena (DE); ARNOLD, Lars, 07806 Neustadt (DE); WILLKE, Alois, 35418 Buseck (DE); PLIETZSCH, Sandro, 07819 Linda (DE)
(74) Vertreter: Kiriczi, Sven Bernhard
(86) Internationale Anmeldenummer: PCT/EP2014/001425
(87) Internationale Veröffentlichungsnummer: WO 2014/202177

(56) Entgegenhaltungen:
- WO-A1-2009/117834
- WO-A2-2007/027474
- DE-A1- 10 231 326
- DE-A1-102007 035 021
- DE-A1-102008 033 383
- US-A1- 2006 067 090
- US-A1- 2006 119 781
- US-A1- 2009 016 074

## Beschreibung

Die Erfindung betrifft einen Fahrzeugscheinwerfer bzw. ein optisches Element für einen Fahrzeugscheinwerfer.

Die DE 10 2009 020 619 A1 offenbart eine Beleuchtungsvorrichtung mit mehreren Leuchtdioden, die ein Leuchtdiodenfeld bilden, das aus wenigstens zwei Zeilen linear nebeneinander angeordneter Leuchtdioden gebildet ist, und mit einem Optikfeld, das im Strahlengang von den Leuchtdioden ausgesendeten Lichts angeordnet ist und eine Anzahl von jeweils wenigstens einer Leuchtdiode zugeordneten optischen Abbildungselementen aufweist. Dabei weist eine erste Zeile des Leuchtdiodenfeldes lichtstärkere Leuchtdioden auf als wenigstens eine zweite Zeile und diesen Leuchtdioden sind erste optische Abbildungselemente zugeordnet, die andere optische Abbildungseigenschaften aufweisen als zweite optische Abbildungselemente, die den Leuchtdioden der wenigstens einen zweiten Zeile des Leuchtdiodenfeldes zugeordnet sind. Ein einzelnes Element einer Abbildungselementenzeile gemäß der DE 10 2009 020 619 A1 ist eine Vorsatzoptik.

Die DE 10 2005 054 955 A1 offenbart ein lichtemittierendes Modul mit zumindest zwei Lichtquellen, die auf einem gemeinsamen Träger aufgebracht sind. Dabei umfasst zumindest eine der Lichtquellen wenigstens zwei Leuchtdiodenchips. Jeder Lichtquelle des Moduls ist eine als Optikkörper bezeichnete Vorsatzoptik nachgeordnet.

Die DE 10 2005 049 685 A1 offenbart ein Kfz-Scheinwerfermodul, mit wenigstens zwei Leuchteinheiten, denen jeweils eine als primäre Optik bezeichnete Vorsatzoptik nachgeordnet ist.

DE 102 31 326 A1 offenbart eine Leuchteinheit für Fahrzeuge mit einer Mehrzahl von in einem Abstand zueinander angeordneten Leuchtelementen, denen jeweils ein Lichtleitelement zugeordnet ist. EP 2 518 397 A2 offenbart ein Lichtmodul eines Kraftfahrzeugs zur Erzeugung einer Spotverteilung einer Fernlicht-Lichtverteilung, die durch eine Überlagerung der Spotverteilung und einer durch mindestens ein anderes Modul erzeugten Grundverteilung gebildet ist, wobei das Lichtmodul in mehrere separat ansteuerbare Unter-Module unterteilt ist, die mehrere streifenförmige Segmente der Spotverteilung erzeugen, wobei sich die streifenförmigen Segmente zu der Spotverteilung ergänzen.

Es ist insbesondere Aufgabe der Erfindung, eine verbesserte Optik für einen Fahrzeugscheinwerfer, insbesondere für einen Kraftfahrzeugscheinwerfer, anzugeben. Es ist eine weitere Aufgabe der Erfindung, die Kosten für die Herstellung von Fahrzeugscheinwerfern zu senken. Es ist eine weitere Aufgabe der Erfindung, die Kosten für die Herstellung von Kraftfahrzeugen zu senken. Es ist zudem wünschenswert, einen weichen Gradienten beim Übergang von einem beleuchteten zu einem unbeleuchteten Bereich zu erhalten.

Vorgenannte Aufgabe wird durch ein optisches Element für einen Fahrzeugscheinwerfer, insbesondere für einen Kraftfahrzeugscheinwerfer, mit einem einstückig gepressten ersten Vorsatzoptikarray aus einem transparenten Material, vorteilhafterweise anorganischem Glas, und zumindest einem einstückig gepressten zweiten Vorsatzoptikarray aus dem oder einem transparenten Material, vorteilhafterweise anorganischem Glas, gelöst, wobei der erste Vorsatzoptikarray
- eine erste Vorsatzoptik mit einer Lichteintrittsfläche und einer Lichtaustrittsfläche,
- zumindest eine zweite Vorsatzoptik mit einer Lichteintrittsfläche und einer Lichtaustrittsfläche und
- einen ersten Verbindungssteg, der die erste Vorsatzoptik mechanisch mit der zweiten Vorsatzoptik verbindet,
umfasst, wobei die erste Vorsatzoptik auf ihrer dem ersten Verbindungssteg abgewandten bzw. gegenüberliegenden Seite einen, insbesondere die Lichtaustrittsfläche der ersten Vorsatzoptik verlängernden, ersten Steg umfasst, wobei die zweite Vorsatzoptik auf ihrer dem ersten Verbindungssteg abgewandten bzw. gegenüberliegenden Seite einen, insbesondere die Lichtaustrittsfläche der zweiten Vorsatzoptik verlängernden, zweiten Steg umfasst, wobei der zweite Vorsatzoptikarray
- eine dritte Vorsatzoptik mit einer Lichteintrittsfläche und einer Lichtaustrittsfläche,
- zumindest eine vierte Vorsatzoptik mit einer Lichteintrittsfläche und einer Lichtaustrittsfläche und
- einen zweiten Verbindungssteg, der die dritte Vorsatzoptik mechanisch mit der vierten Vorsatzoptik verbindet,

umfasst, und wobei der erste Vorsatzoptikarray und der zweite Vorsatzoptikarray derart zueinander angeordnet und fixiert sind, dass sie derart ineinander greifen, dass sie einen Array bilden, bei dem
- die zweite Vorsatzoptik zwischen der dritten Vorsatzoptik und der vierten Vorsatzoptik und
- die dritte Vorsatzoptik zwischen der ersten Vorsatzoptik und der zweiten Vorsatzoptik
angeordnet ist.

Ein Steg bzw. ein Verbindungssteg im Sinne der Erfindung wird insbesondere nicht direkt bzw. gezielt vom Licht, das durch die Lichteintrittsfläche der Vorsatzoptik eintritt, ausgeleuchtet. Es kann jedoch vorgesehen sein, dass Streulichtanteile im Inneren eines Steges bzw. eines Verbindungssteges auftreffen. Ein Steg bzw. ein Verbindungssteg im Sinne der Erfindung ist insbesondere nicht unmittelbar mit der Lichteintrittsfläche einer Vorsatzoptik verbunden. Ein Steg im Sinne der Erfindung ist insbesondere (insbesondere in der Nähe der Lichtaustrittsfläche der Vorsatzoptik) entsprechend einem Verbindungssteg ausgestaltet, jedoch ohne dass eine Verbindung zu einer weiteren Vorsatzoptik geschaffen wird.

Eine optisch wirksame Lichteintrittsfläche bzw. eine optisch wirksame Lichtaustrittsfläche im Sinne der Erfindung ist insbesondere eine optisch wirksame Oberfläche. Eine optisch wirksame Oberfläche im Sinne der Erfindung ist insbesondere eine Oberfläche, an der es bei bestimmungsgemäßer Verwendung der Vorsatzoptik zur Lichtbrechung kommt. Eine optisch wirksame Oberfläche im Sinne der Erfindung ist insbesondere eine Oberfläche, an der bei bestimmungsgemäßer Verwendung der Vorsatzoptik die Richtung von Licht, das durch diese Oberfläche durchtritt, geändert wird.

Transparentes Material ist im Sinne der Erfindung insbesondere Glas. Transparentes Material ist im Sinne der Erfindung insbesondere anorganisches Glas. Transparentes Material ist im Sinne der Erfindung insbesondere Silikatglas. Transparentes Material ist im Sinne der Erfindung insbesondere Glas, wie es in der PCT/EP2008/010136 beschrieben ist. Glas im Sinne der Erfindung umfasst insbesondere
0,2 bis 2 Gew.-% Al₂O₃,
0,1 bis 1 Gew.-% Li₂O
0,3, insbesondere 0,4, bis 1,5 Gew.-% Sb₂O₃,
60 bis 75 Gew.-% SiO₂,
3 bis 12 Gew.-% Na₂O,
3 bis 12 Gew.-% K₂O und
3 bis 12 Gew.-% CaO.

Eine Vorsatzoptik im Sinne der Erfindung kann ein Lichttunnel bzw. ein Lichtleiter sein. Eine Vorsatzoptik im Sinne der Erfindung dient insbesondere der Ausrichtung von Licht, das in die Lichteintrittsfläche eingestrahlt wird, wobei insbesondere vorgesehen ist, dass durch die Lichtaustrittsfläche (entsprechend) gerichtetes Licht austritt.

In vorteilhafter Ausgestaltung der Erfindung umfasst die erste Vorsatzoptik, die zweite Vorsatzoptik, die dritte Vorsatzoptik und/oder die vierte Vorsatzoptik zwischen ihrer Lichteintrittsfläche und ihrer Lichtaustrittsfläche eine blankgepresste Oberfläche, insbesondere zur Totalreflexion von in die Lichteintrittsfläche eingestrahlten Lichts.

In weiterhin vorteilhafter Ausgestaltung der Erfindung beträgt der Abstand
- zwischen der zweiten Vorsatzoptik und der dritten Vorsatzoptik nicht mehr als 0,5 mm,
- zwischen der zweiten Vorsatzoptik und der vierten Vorsatzoptik nicht mehr als 0,5 mm, und/oder
- zwischen der ersten Vorsatzoptik und der dritten Vorsatzoptik nicht mehr als 0,5 mm.

In weiterhin vorteilhafter Ausgestaltung der Erfindung umfasst die dritte Vorsatzoptik auf ihrer dem zweiten Verbindungssteg abgewandten bzw. gegenüberliegenden Seite einen, insbesondere die Lichtaustrittsfläche der dritten Vorsatzoptik verlängernden, dritten Steg. In weiterhin vorteilhafter Ausgestaltung der Erfindung umfasst die vierte Vorsatzoptik auf ihrer dem zweiten Verbindungssteg abgewandten bzw. gegenüberliegenden Seite einen, insbesondere die Lichtaustrittsfläche der vierten Vorsatzoptik verlängernden, vierten Steg.

Vorgenannte Aufgabe wird zudem durch ein optisches Element für einen Fahrzeugscheinwerfer, insbesondere für einen Kraftfahrzeugscheinwerfer, mit einem einstückig gepressten ersten Vorsatzoptikarray aus einem transparenten Material, vorteilhafterweise anorganischem Glas, einem einstückig gepressten zweiten Vorsatzoptikarray aus dem oder einem transparenten Material, vorteilhafterweise anorganischem Glas, und zumindest einem einstückig gepressten dritten Vorsatzoptikarray aus dem oder einem transparenten Material, vorteilhafterweise anorganischem Glas, gelöst, wobei der erste Vorsatzoptikarray
- eine erste Vorsatzoptik mit einer Lichteintrittsfläche und einer Lichtaustrittsfläche,
- zumindest eine zweite Vorsatzoptik mit einer Lichteintrittsfläche und einer Lichtaustrittsfläche und
- einen ersten Verbindungssteg, der die erste Vorsatzoptik mechanisch mit der zweiten Vorsatzoptik verbindet,
umfasst, wobei der zweite Vorsatzoptikarray
- eine dritte Vorsatzoptik mit einer Lichteintrittsfläche und einer Lichtaustrittsfläche,
- zumindest eine vierte Vorsatzoptik mit einer Lichteintrittsfläche und einer Lichtaustrittsfläche und
- einen zweiten Verbindungssteg, der die dritte Vorsatzoptik mechanisch mit der vierten Vorsatzoptik verbindet,
umfasst, wobei der dritte Vorsatzoptikarray
- eine fünfte Vorsatzoptik mit einer Lichteintrittsfläche und einer Lichtaustrittsfläche,
- zumindest eine sechste Vorsatzoptik mit einer Lichteintrittsfläche und einer Lichtaustrittsfläche und
- einen dritten Verbindungssteg, der die fünfte Vorsatzoptik mechanisch mit der sechsten Vorsatzoptik verbindet,
umfasst, wobei der erste Vorsatzoptikarray, der zweite Vorsatzoptikarray und der dritte Vorsatzoptikarray derart zueinander angeordnet und fixiert sind, dass sie derart ineinander greifen, dass sie einen Array bilden, bei dem
- die erste Vorsatzoptik zwischen der dritten Vorsatzoptik und der vierten Vorsatzoptik angeordnet ist,
- die zweite Vorsatzoptik zwischen der fünften Vorsatzoptik und der sechsten Vorsatzoptik angeordnet ist und
- die vierte Vorsatzoptik und die fünfte Vorsatzoptik zwischen der ersten Vorsatzoptik und der zweiten Vorsatzoptik angeordnet sind,
und wobei
- die erste Vorsatzoptik auf ihrer dem ersten Verbindungssteg abgewandten bzw. gegenüberliegenden Seite einen, insbesondere die Lichtaustrittsfläche der ersten Vorsatzoptik verlängernden, ersten Steg umfasst und/oder
- die zweite Vorsatzoptik auf ihrer dem ersten Verbindungssteg abgewandten bzw. gegenüberliegenden Seite einen, insbesondere die Lichtaustrittsfläche der zweiten Vorsatzoptik verlängernden, zweiten Steg umfasst und/oder
- die dritte Vorsatzoptik auf ihrer dem zweiten Verbindungssteg abgewandten bzw. gegenüberliegenden Seite einen, insbesondere die Lichtaustrittsfläche der dritten Vorsatzoptik verlängernden, dritten Steg umfasst und/oder
- die vierte Vorsatzoptik auf ihrer dem zweiten Verbindungssteg abgewandten bzw. gegenüberliegenden Seite einen, insbesondere die Lichtaustrittsfläche der vierten Vorsatzoptik verlängernden, vierten Steg umfasst und/oder
- die fünfte Vorsatzoptik auf ihrer dem dritten Verbindungssteg abgewandten bzw. gegenüberliegenden Seite einen, insbesondere die Lichtaustrittsfläche der fünften Vorsatzoptik verlängernden, fünften Steg umfasst und/oder
- die sechste Vorsatzoptik auf ihrer dem dritten Verbindungssteg abgewandten bzw. gegenüberliegenden Seite einen, insbesondere die Lichtaustrittsfläche der sechsten Vorsatzoptik verlängernden, sechsten Steg umfasst.

In vorteilhafter Ausgestaltung der Erfindung beträgt der Abstand
- zwischen der ersten Vorsatzoptik und der dritten Vorsatzoptik nicht mehr als 0,5 mm,
- zwischen der ersten Vorsatzoptik und der vierten Vorsatzoptik nicht mehr als 0,5 mm,
- zwischen der zweiten Vorsatzoptik und der fünften Vorsatzoptik nicht mehr als 0,5 mm,
- zwischen der zweiten Vorsatzoptik und der sechsten Vorsatzoptik nicht mehr als 0,5 mm, und/oder
- zwischen der vierten Vorsatzoptik und der fünften Vorsatzoptik nicht mehr als 0,5 mm.

In weiterhin vorteilhafter Ausgestaltung der Erfindung umfasst die erste Vorsatzoptik , die zweite Vorsatzoptik, die dritte Vorsatzoptik, die vierte Vorsatzoptik, die fünfte Vorsatzoptik und/oder die sechste Vorsatzoptik zwischen ihrer Lichteintrittsfläche und ihrer Lichtaustrittsfläche eine blankgepresste Oberfläche, insbesondere zur Totalreflexion von in die Lichteintrittsfläche eingestrahlten Lichts.

In vorteilhafter Ausgestaltung der Erfindung weist ein Fahrzeugscheinwerfer, insbesondere ein Kraftfahrzeugscheinwerfer, zumindest ein vorgenanntes optisches Element sowie eine, insbesondere eine LED umfassende, Lichtquellenanordnung zur Einkopplung von Licht in die Lichteintrittsfläche(n) auf. In weiterhin vorteilhafter Ausgestaltung der Erfindung umfasst die Lichtquellenanordnung zumindest eine LED oder eine Anordnung von LEDs. In vorteilhafter Ausgestaltung der Erfindung umfasst die Lichtquellenanordnung zumindest eine OLED oder eine Anordnung von OLEDs. Die Lichtquellenanordnung kann zum Beispiel auch ein flächiges Leuchtfeld sein. In einer Ausgestaltung der Erfindung weist ein Fahrzeugscheinwerfer, insbesondere ein Kraftfahrzeugscheinwerfer, zumindest ein vorgenanntes optisches Element sowie eine im Lichtpfad hinter dem optischen Element angeordnete Optik/Linse, insbesondere zur Abbildung der Lichtaustrittsflächen, auf.

In weiterhin vorteilhafter Ausgestaltung der Erfindung sind eine Lichteinkoppelfläche und/oder eine Lichtauskoppelfläche einer Vorsatzoptik blankgepresst.

In weiterhin vorteilhafter Ausgestaltung der Erfindung umfasst ein Vorsatzoptikarray weniger als 10 Vorsatzoptiken. In weiterhin vorteilhafter Ausgestaltung der Erfindung umfasst ein Vorsatzoptikarray 4 oder 5 oder 6 Vorsatzoptiken.

In weiterhin vorteilhafter Ausgestaltung der Erfindung beträgt der Abstand einer Vorsatzoptik des ersten Vorsatzoptikarrays zu einer benachbarten Vorsatzoptik des zweiten Vorsatzoptikarrays nicht mehr als 3,5 mm. In weiterhin vorteilhafter Ausgestaltung der Erfindung beträgt der Abstand einer Vorsatzoptik des ersten Vorsatzoptikarrays zu einer benachbarten Vorsatzoptik des zweiten Vorsatzoptikarrays nicht mehr als 1 mm. In weiterhin vorteilhafter Ausgestaltung der Erfindung beträgt der Abstand einer Vorsatzoptik des ersten Vorsatzoptikarrays zu einer benachbarten Vorsatzoptik des zweiten Vorsatzoptikarrays nicht mehr als 0,5 mm. In weiterhin vorteilhafter Ausgestaltung der Erfindung beträgt der Abstand einer Vorsatzoptik des ersten Vorsatzoptikarrays zu einer benachbarten Vorsatzoptik des zweiten Vorsatzoptikarrays 0,2 bis 0,075 mm. In weiterhin vorteilhafter Ausgestaltung der Erfindung beträgt der Abstand einer Vorsatzoptik des ersten Vorsatzoptikarrays zu einer benachbarten Vorsatzoptik des zweiten Vorsatzoptikarrays nicht weniger als 0,05 mm.

Unter Blankpressen soll im Sinne der Erfindung insbesondere verstanden werden, eine optisch wirksame Oberfläche derart zu pressen, dass eine anschließende Nachbearbeitung der Kontur dieser optisch wirksamen Oberfläche entfallen kann bzw. entfällt bzw. nicht vorgesehen ist. Es ist somit insbesondere vorgesehen, dass eine blankgepresste Oberfläche nach dem Blankpressen nicht geschliffen wird.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere erfinderische Einzelheiten oder Kombinationen ergeben sich aus den Zeichnungen. Dabei zeigen:
- Fig. 1: ein Ausführungsbeispiel eines optischen Elementes für einen Fahrzeugscheinwerfer bzw. einen Kraftfahrzeugscheinwerfer in einer Draufsicht,
- Fig. 2: einen Vorsatzoptikarray des optischen Elementes gemäß Fig. 1 in einer perspektivischen Darstellung,
- Fig. 3: den Vorsatzoptikarray gemäß Fig. 2 in einer Draufsicht,
- Fig. 4: den Vorsatzoptikarray gemäß Fig. 2 in einer Querschnittsdarstellung entlang einer in Fig. 3 dargestellten Schnittlinie A-A,
- Fig. 5: den Vorsatzoptikarray gemäß Fig. 2 in einer Querschnittsdarstellung entlang einer in Fig. 3 dargestellten Schnittlinie B-B,
- Fig. 6: einen weiteren Vorsatzoptikarray des optischen Elementes gemäß Fig. 1 in einer perspektivischen Darstellung,
- Fig. 7: den Vorsatzoptikarray gemäß Fig. 6 in einer Draufsicht,
- Fig. 8: den Vorsatzoptikarray gemäß Fig. 6 in einer Querschnittsdarstellung entlang einer in Fig. 7 dargestellten Schnittlinie A-A,
- Fig. 9: den Vorsatzoptikarray gemäß Fig. 6 in einer Querschnittsdarstellung entlang einer in Fig. 7 dargestellten Schnittlinie B-B,
- Fig. 10: ein Ausführungsbeispiel eines alternativ zum optischen Element gemäß Fig. 1 ausgestalteten optischen Elementes für einen Fahrzeugscheinwerfer bzw. einen Kraftfahrzeugscheinwerfer in einer perspektivischen Draufsicht,
- Fig. 11: eine mittels eines gegenüber dem optischen Element gemäß Fig. 10 abgewandelten optischen Elements erzielte Lichtverteilung und
- Fig. 12: eine mittels des optischen Elements gemäß Fig. 10 erzielte Lichtverteilung.

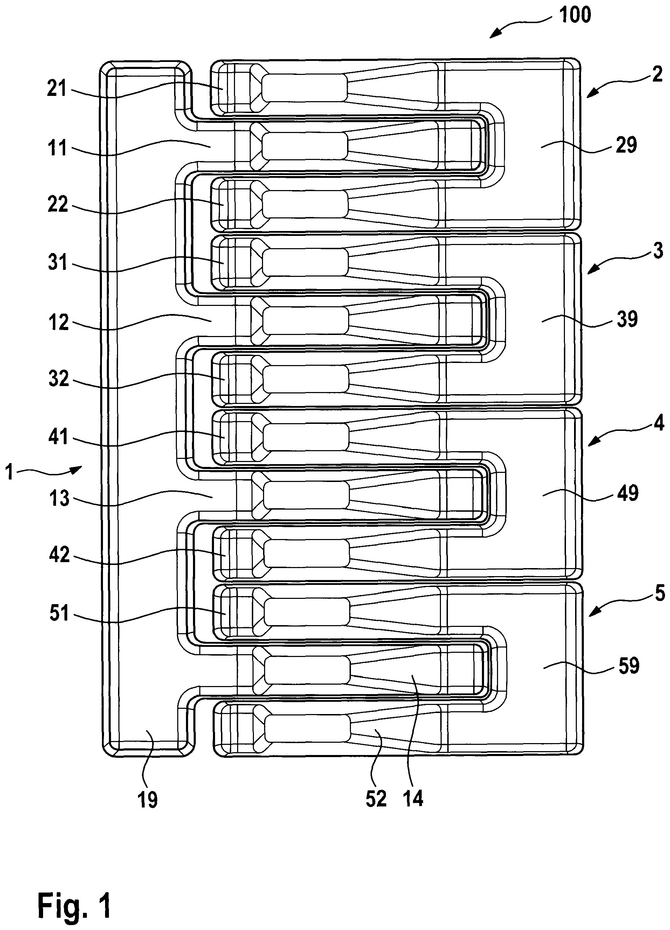

Fig. 1 zeigt ein Ausführungsbeispiel eines optischen Elementes 100 für einen Fahrzeugscheinwerfer bzw. einen Kraftfahrzeugscheinwerfer in einer Draufsicht. Das optische Element 100 umfasst einen einstückig gepressten Vorsatzoptikarray 1 aus anorganischem Glas, einen einstückig gepressten Vorsatzoptikarray 2 aus anorganischem Glas, einen einstückig gepressten Vorsatzoptikarray 3 aus anorganischem Glas, einen einstückig gepressten Vorsatzoptikarray 4 aus anorganischem Glas und einen einstückig gepressten Vorsatzoptikarray 5 aus anorganischem Glas. Der Vorsatzoptikarray 1 umfasst einen Verbindungssteg 19, an dem eine Vorsatzoptik 11, eine Vorsatzoptik 12, eine Vorsatzoptik 13 und eine Vorsatzoptik 14 angeordnet sind. Der Vorsatzoptikarray 2 umfasst eine Vorsatzoptik 21 und eine Vorsatzoptik 22, die an einem Verbindungssteg 29 angeordnet sind. Der Vorsatzoptikarray 3 umfasst eine Vorsatzoptik 31 und eine Vorsatzoptik 32, die an einem Verbindungssteg 39 angeordnet sind. Der Vorsatzoptikarray 4 umfasst eine Vorsatzoptik 41 und eine Vorsatzoptik 42, die an einem Verbindungssteg 49 angeordnet sind. Der Vorsatzoptikarray 5 umfasst eine Vorsatzoptik 51 und eine Vorsatzoptik 52, die an einem Verbindungssteg 59 angeordnet sind. Dabei sind die Vorsatzoptiken 21, 11, 22, 31, 12, 32, 41, 13, 42, 51, 14 und 52 derart zueinander angeordnet, dass sie einen Array bilden, bei dem die Vorsatzoptik 11 zwischen den Vorsatzoptiken 21 und 22 angeordnet ist, die Vorsatzoptik 12 zwischen den Vorsatzoptiken 31 und 32 angeordnet ist, die Vorsatzoptik 13 zwischen den Vorsatzoptiken 41 und 42 angeordnet ist, die Vorsatzoptik 14 zwischen den Vorsatzoptiken 51 und 52 angeordnet ist, die Vorsatzoptiken 22 und 31 zwischen den Vorsatzoptiken 11 und 12 angeordnet sind, die Vorsatzoptiken 32 und 41 zwischen den Vorsatzoptiken 12 und 13 angeordnet sind und die Vorsatzoptiken 42 und 51 zwischen den Vorsatzoptiken 13 und 14 angeordnet sind.

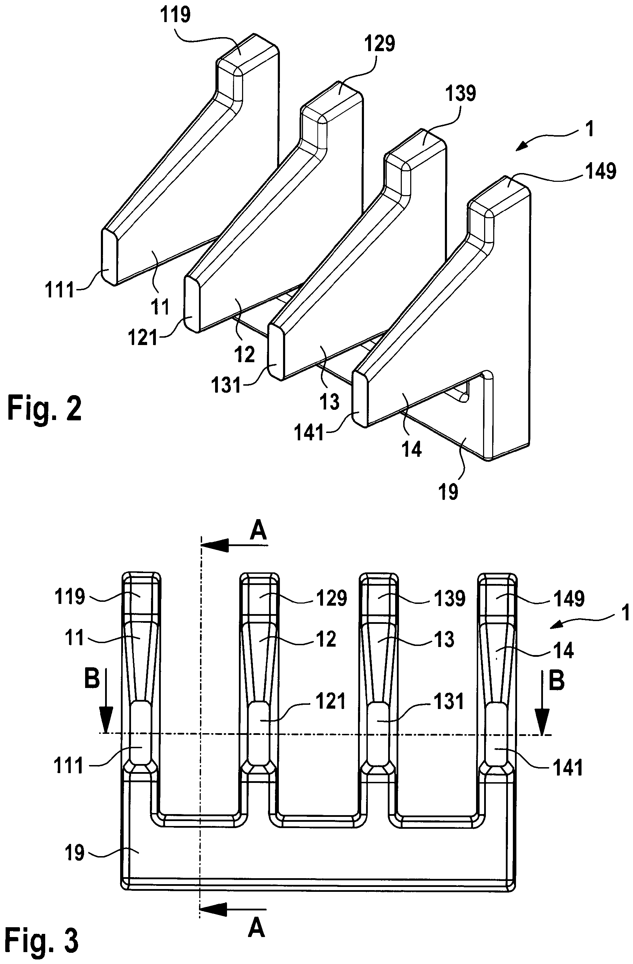

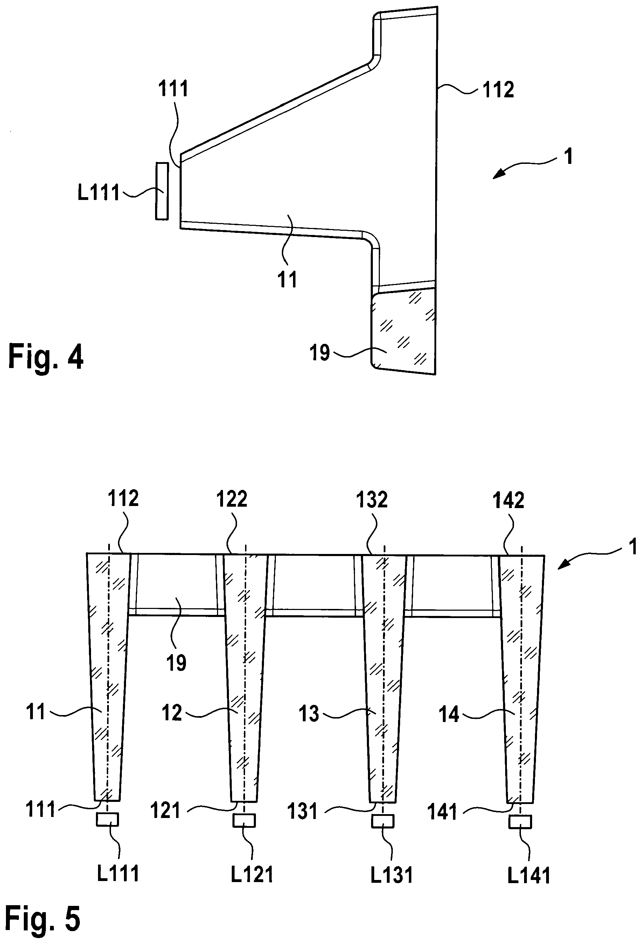

Fig. 2 zeigt den Vorsatzoptikarray 1 in einer perspektivischen Darstellung. Fig. 3 zeigt den Vorsatzoptikarray 1 in einer Draufsicht. Fig. 4 zeigt den Vorsatzoptikarray 1 in einer Querschnittsdarstellung entlang der in Fig. 3 dargestellten Schnittlinie A-A, und Fig. 5 zeigt den Vorsatzoptikarray 1 in einer Querschnittsdarstellung entlang der in Fig. 3 dargestellten Schnittlinie B-B. Die Vorsatzoptik 11 umfasst eine Lichteintrittsfläche 111 und eine Lichtaustrittsfläche 112 sowie einen auf der dem Verbindungssteg 19 abgewandten Seite bzw. gegenüberliegenden Seite der Lichtaustrittsfläche 112 bzw. der Vorsatzoptik 11 angeordneten, die Lichtaustrittsfläche 112 verlängernden, Steg 119. Die Vorsatzoptik 12 umfasst eine Lichteintrittsfläche 121 und eine Lichtaustrittsfläche 122 sowie einen auf der dem Verbindungssteg 19 abgewandten Seite bzw. gegenüberliegenden Seite der Lichtaustrittsfläche 122 bzw. der Vorsatzoptik 12 angeordneten, die Lichtaustrittsfläche 122 verlängernden, Steg 129. Die Vorsatzoptik 13 umfasst eine Lichteintrittsfläche 131 und eine Lichtaustrittsfläche 132 sowie einen auf der dem Verbindungssteg 19 abgewandten Seite bzw. gegenüberliegenden Seite der Lichtaustrittsfläche 132 bzw. der Vorsatzoptik 13 angeordneten, die Lichtaustrittsfläche 132 verlängernden, Steg 139. Die Vorsatzoptik 14 umfasst eine Lichteintrittsfläche 141 und eine Lichtaustrittsfläche 142 sowie einen auf der dem Verbindungssteg 19 abgewandten Seite bzw. gegenüberliegenden Seite der Lichtaustrittsfläche 142 bzw. der Vorsatzoptik 14 angeordneten, die Lichtaustrittsfläche 142 verlängernden, Steg 149.

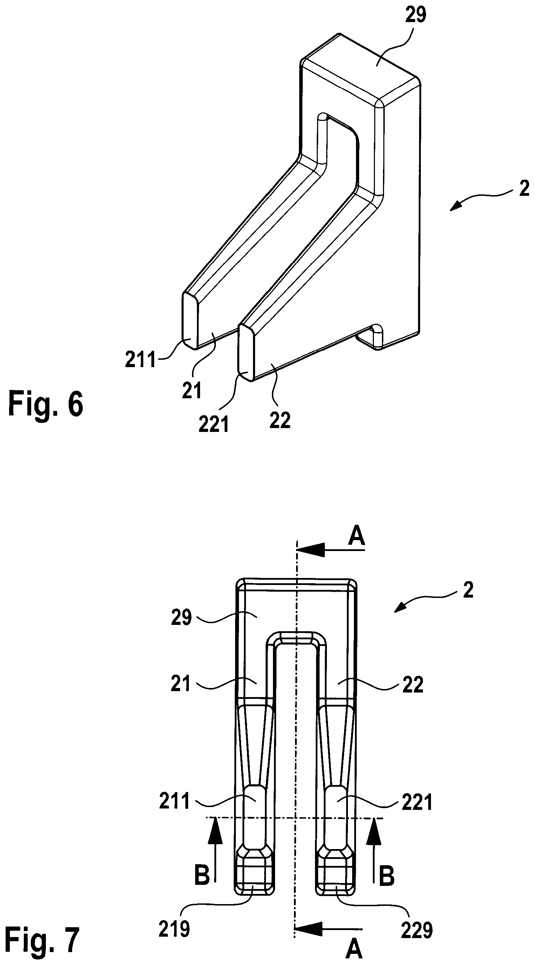

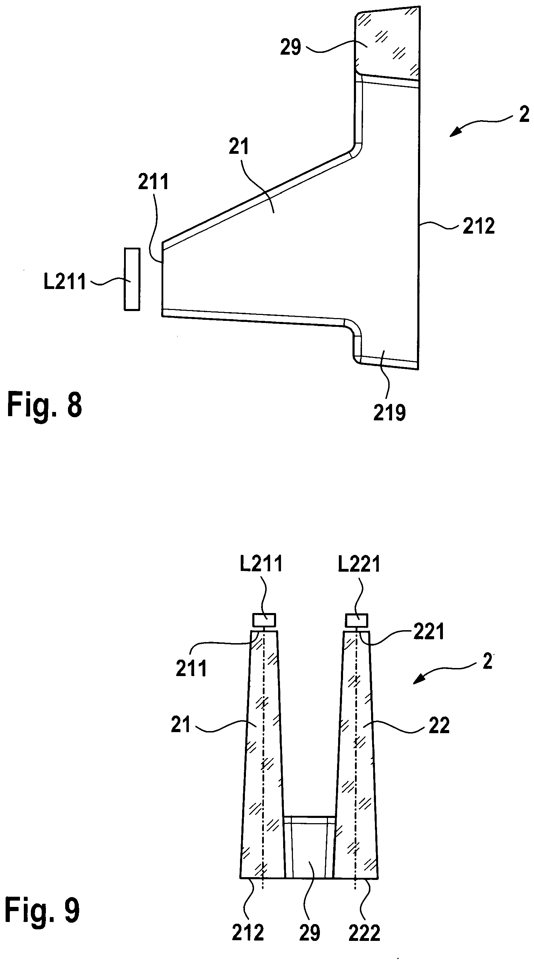

Fig. 6 zeigt den Vorsatzoptikarray 2 in einer perspektivischen Darstellung. Fig. 7 zeigt den Vorsatzoptikarray 2 in einer Draufsicht. Fig. 8 zeigt den Vorsatzoptikarray 2 in einer Querschnittsdarstellung entlang der in Fig. 7 dargestellten Schnittlinie A-A, und Fig. 9 zeigt den Vorsatzoptikarray 2 in einer Querschnittsdarstellung entlang der in Fig. 7 dargestellten Schnittlinie B-B. Die Vorsatzoptik 21 umfasst eine Lichteintrittsfläche 211 und eine Lichtaustrittsfläche 212 sowie einen auf der dem Verbindungssteg 29 abgewandten Seite bzw. gegenüberliegenden Seite der Lichtaustrittsfläche 212 bzw. der Vorsatzoptik 21 angeordneten, die Lichtaustrittsfläche 212 verlängernden, Steg 219. Die Vorsatzoptik 22 umfasst eine Lichteintrittsfläche 221 und eine Lichtaustrittsfläche 222 sowie einen auf der dem Verbindungssteg 29 abgewandten Seite bzw. gegenüberliegenden Seite der Lichtaustrittsfläche 222 bzw. der Vorsatzoptik 22 angeordneten, die Lichtaustrittsfläche 222 verlängernden, Steg 229. Die Vorsatzoptikarrays 3, 4 und 5 sind insbesondere analog zum Vorsatzoptikarray 2 ausgestaltet.

Zur Herstellung des optischen Elements 100 werden die Vorsatzoptikarrays 1, 2, 3, 4 und 5 gepresst, insbesondere blankgepresst. Danach bzw. anschließend werden die Vorsatzoptikarrays 2, 3, 4 und 5 in den Vorsatzoptikarray 1 eingeschoben und zum Vorsatzoptikarray 1 fixiert. Es kann vorgesehen sein, dass zwei oder mehr dem optischen Element 100 entsprechende optische Elemente aneinandergereiht werden.

Die Vorsatzoptiken 21, 11, 22, 31, 12, 32, 41, 13, 42, 51, 14 und 52 umfassen zwischen ihrer jeweiligen Lichteintrittsfläche 211, 111, 221, 121, 131, 141 und ihrer jeweiligen Lichtaustrittsfläche 212, 112, 222, 122, 132, 142 blankgepresste Seitenflächen, an denen Licht, das durch die jeweilige Lichteintrittsfläche 211, 111, 221, 121, 131, 141 eingestrahlt wird, der Totalreflexion unterliegt. Die Seitenflächen sind sogenannte TIR-Flächen.

Zur Implementierung eines Kraftfahrzeugscheinwerfers sind den Lichteintrittsflächen 211, 111, 221, 121, 131, 141 der Vorsatzoptiken 21, 11, 22, 31, 12, 32, 41, 13, 42, 51, 14 und 52 LEDs zugeordnet, wie dies beispielhaft in Fig. 5 und in Fig. 7 dargestellt ist. Dabei bezeichnet Bezugszeichen L111 eine der Lichteintrittsfläche 111 zugeordnete LED, mittels der Licht in die Lichteintrittsfläche 111 eingestrahlt wird. Bezugszeichen L121 bezeichnet eine LED, mittels der Licht in die Lichteintrittsfläche 121 eingestrahlt wird. Bezugszeichen L131 bezeichnet eine LED, mittels der Licht in die Lichteintrittsfläche 131 eingestrahlt wird. Bezugszeichen L141 bezeichnet eine LED, mittels der Licht in die Lichteintrittsfläche 141 eingestrahlt wird. Bezugszeichen L211 bezeichnet eine LED, mittels der Licht in die Lichteintrittsfläche 211 eingestrahlt wird. Bezugszeichen L221 bezeichnet eine LED, mittels der Licht in die Lichteintrittsfläche 221 eingestrahlt wird. Den übrigen Lichteintrittsflächen sind entsprechende LEDs zugeordnet, wobei insbesondere vorgesehen ist, dass alle LEDs oder ein Teil der LEDs separat bzw. einzeln ansteuerbar sind.

In einem Ausführungsbeispiel beträgt die Größe der LEDs 1 x 4 mm. Die Lichteintrittsflächen 211, 111, 221, 121, 131, 141 der Vorsatzoptiken 21, 11, 22, 31, 12, 32, 41, 13, 42, 51, 14 und 52 betragen 1,2 x 5 mm. Der Abstand von Lichteintrittsfläche zu Lichtaustrittsfläche beträgt 10 mm. Der Abstand einer Vorsatzoptik eines Vorsatzoptikarrays zu einer benachbarten Vorsatzoptik eines weiteren Vorsatzoptikarrays beträgt dabei 0,1 mm. So beträgt der Abstand zwischen der Vorsatzoptik 11 und der Vorsatzoptik 21 zum Beispiel 0,1 mm. Der Abstand zwischen der Vorsatzoptik 21 und der Vorsatzoptik 12 beträgt zum Beispiel 0,1 mm.

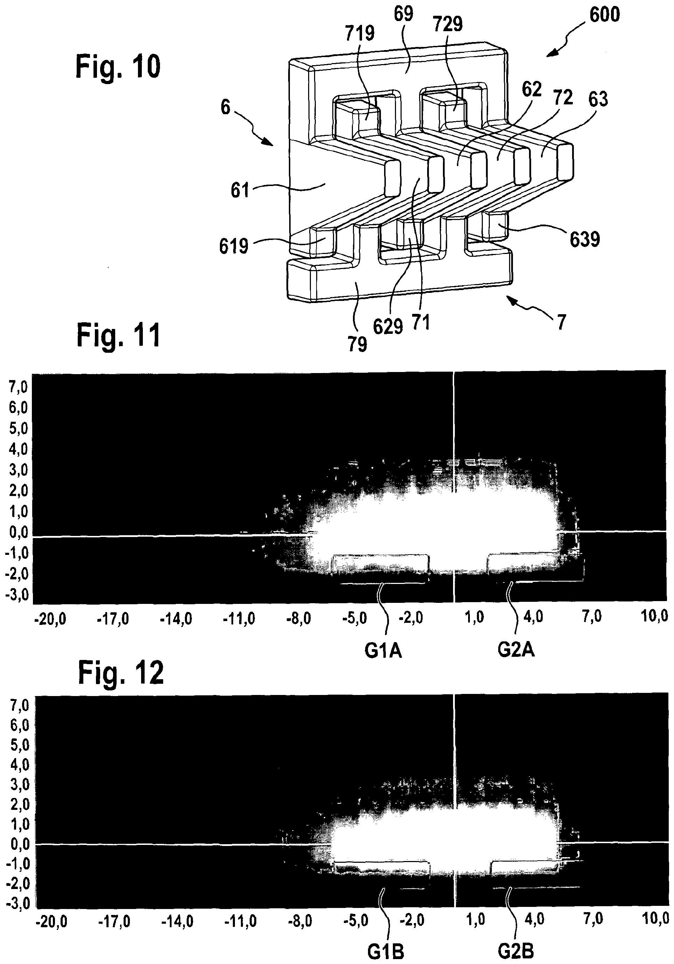

Fig. 10 zeigt ein Ausführungsbeispiel eines alternativ ausgestalteten optischen Elements 600 für einen Fahrzeugscheinwerfer bzw. einen Kraftfahrzeugscheinwerfer in einer perspektivischen Draufsicht. Das optische Element 600 umfasst einen einstückig gepressten Vorsatzoptikarray 6 aus anorganischem Glas und einen einstückig gepressten Vorsatzoptikarray 7 aus anorganischem Glas. Der Vorsatzoptikarray 6 umfasst einen Verbindungssteg 69, an dem eine Vorsatzoptik 61, eine Vorsatzoptik 62 und eine Vorsatzoptik 63 angeordnet sind. Der Vorsatzoptikarray 7 umfasst eine Vorsatzoptik 71 und eine Vorsatzoptik 72, die an einem Verbindungssteg 79 angeordnet sind.

Die Vorsatzoptik 61 umfasst eine Lichteintrittsfläche und eine Lichtaustrittsfläche sowie einen auf der dem Verbindungssteg 69 abgewandten Seite bzw. gegenüberliegenden Seite der Lichtaustrittsfläche bzw. der Vorsatzoptik 61 angeordneten, die Lichtaustrittsfläche verlängernden, Steg 619. Die Vorsatzoptik 62 umfasst eine Lichteintrittsfläche und eine Lichtaustrittsfläche sowie einen auf der dem Verbindungssteg 69 abgewandten Seite bzw. gegenüberliegenden Seite der Lichtaustrittsfläche bzw. der Vorsatzoptik 62 angeordneten, die Lichtaustrittsfläche verlängernden, Steg 629. Die Vorsatzoptik 63 umfasst eine Lichteintrittsfläche und eine Lichtaustrittsfläche sowie einen auf der dem Verbindungssteg 69 abgewandten Seite bzw. gegenüberliegenden Seite der Lichtaustrittsfläche bzw. der Vorsatzoptik 63 angeordneten, die Lichtaustrittsfläche verlängernden, Steg 639. Die Vorsatzoptik 71 umfasst eine Lichteintrittsfläche und eine Lichtaustrittsfläche sowie einen auf der dem Verbindungssteg 79 abgewandten Seite bzw. gegenüberliegenden Seite der Lichtaustrittsfläche bzw. der Vorsatzoptik 71 angeordneten, die Lichtaustrittsfläche verlängernden, Steg 719. Die Vorsatzoptik 72 umfasst eine Lichteintrittsfläche und eine Lichtaustrittsfläche sowie einen auf der dem Verbindungssteg 79 abgewandten Seite bzw. gegenüberliegenden Seite der Lichtaustrittsfläche bzw. der Vorsatzoptik 72 angeordneten, die Lichtaustrittsfläche verlängernden, Steg 729. Die Vorsatzoptiken 61, 62, 63, 71 und 72 sind dabei insbesondere vergleichbar bzw. entsprechend den Vorsatzoptiken 11, 12, 13, 14, 21, 22, 31, 32, 41, 42, 51 bzw. 52 ausgestaltet.

Fig. 11 zeigt eine mittels eines gegenüber dem optischen Element 600 abgewandelten optischen Elements erzielte Lichtverteilung. Das verwendete optische Element unterscheidet sich von dem optischen Element 600 dadurch, dass keine Stege 619, 629, 639, 719 bzw. 729 vorgesehen sind. Fig. 12 zeigt zum Vergleich eine mittels des optischen Elements 600 erzielte Lichtverteilung. Die optische Wirkung der Stege 619, 629, 639, 719, 729, in die nicht gezielt Licht eingestrahlt wird, zeigt sich beim Vergleich des mit Bezugszeichen G1A bezeichneten Bereichs mit dem mit Bezugszeichen G1B bezeichneten Bereich bzw. beim Vergleich des mit Bezugszeichen G2A bezeichneten Bereichs mit dem mit Bezugszeichen G2B bezeichneten Bereich. Durch die Stege 619, 629, 639, 719, 729 wird ein weicherer Übergang bzw. Gradient zwischen einem ausgeleuchteten Bereich und einem nicht ausgeleuchteten Bereich erzielt.

## Patentansprüche

1. Optisches Element (100) für einen Fahrzeugscheinwerfer, insbesondere einem Kraftfahrzeugscheinwerfer, mit einem einstückig gepressten ersten Vorsatzoptikarray (1) aus einem transparenten Material, vorteilhafterweise anorganischem Glas, und zumindest einem einstückig gepressten zweiten Vorsatzoptikarray (3) aus dem oder einem transparenten Material, vorteilhafterweise anorganischem Glas, wobei der erste Vorsatzoptikarray (1) - eine erste Vorsatzoptik (11) mit einer Lichteintrittsfläche und einer Lichtaustrittsfläche,
- zumindest eine zweite Vorsatzoptik (12) mit einer Lichteintrittsfläche und einer Lichtaustrittsfläche und
- einen ersten Verbindungssteg (19), der die erste Vorsatzoptik (11) mechanisch mit der zweiten Vorsatzoptik (12) verbindet, umfasst, wobei die erste Vorsatzoptik (11) auf ihrer dem ersten Verbindungssteg (19) abgewandten bzw. gegenüberliegenden Seite einen, insbesondere die Lichtaustrittsfläche der ersten Vorsatzoptik (11) verlängernden, ersten Steg (119) umfasst, wobei die zweite Vorsatzoptik (12) auf ihrer dem ersten Verbindungssteg abgewandten bzw. gegenüberliegenden Seite einen, insbesondere die Lichtaustrittsfläche der zweiten Vorsatzoptik verlängernden, zweiten Steg (129) umfasst, wobei der zweite Vorsatzoptikarray (3) - eine dritte Vorsatzoptik (31) mit einer Lichteintrittsfläche und einer Lichtaustrittsfläche,
- zumindest eine vierte Vorsatzoptik (32) mit einer Lichteintrittsfläche und einer Lichtaustrittsfläche und
- einen zweiten Verbindungssteg (39) der die dritte Vorsatzoptik (31) mechanisch mit der vierten Vorsatzoptik (32) verbindet, umfasst, und wobei der erste Vorsatzoptikarray (1) und der zweite Vorsatzoptikarray (3) derart zueinander angeordnet und fixiert sind, dass sie derart ineinander greifen, dass sie einen Array bilden, bei dem
- die zweite Vorsatzoptik (12) zwischen der dritten Vorsatzoptik (31) und der vierten Vorsatzoptik (32) und
- die dritte (31) zwischen der ersten Vorsatzoptik (11) und der zweiten Vorsatzoptik (12) angeordnet ist.

2. Optisches Element nach Anspruch 1, **dadurch gekennzeichnet, dass** die erste Vorsatzoptik, die zweite Vorsatzoptik, die dritte Vorsatzoptik und/oder die vierte Vorsatzoptik zwischen ihrer Lichteintrittsfläche und ihrer Lichtaustrittsfläche eine blankgepresste Oberfläche, insbesondere zur Totalreflexion von in die Lichteintrittsfläche eingestrahlten Lichts, umfasst.

3. Optisches Element nach Anspruch 1 oder 2, **dadurch gekennzeichnet, dass** der Abstand
- zwischen der zweiten Vorsatzoptik und der dritten Vorsatzoptik nicht mehr als 0,5 mm,
- zwischen der zweiten Vorsatzoptik und der vierten Vorsatzoptik nicht mehr als 0,5 mm, und/oder
- zwischen der ersten Vorsatzoptik und der dritten Vorsatzoptik nicht mehr als 0,5 mm,
beträgt.

4. Optisches Element nach Anspruch 1, 2 oder 3, **dadurch gekennzeichnet, dass** die dritte Vorsatzoptik auf ihrer dem zweiten Verbindungssteg abgewandten bzw. gegenüberliegenden Seite einen, insbesondere die Lichtaustrittsfläche der dritten Vorsatzoptik verlängernden, dritten Steg umfasst,

5. Optisches Element nach Anspruch 1, 2, 3 oder 4, **dadurch gekennzeichnet, dass** die vierte Vorsatzoptik auf ihrer dem zweiten Verbindungssteg abgewandten bzw. gegenüberliegenden Seite einen, insbesondere die Lichtaustrittsfläche der vierten Vorsatzoptik verlängernden, vierten Steg umfasst.

6. Optisches Element (100) für einen Fahrzeugscheinwerfer, insbesondere einem Kraftfahrzeugscheinwerfer, mit einem einstückig gepressten ersten Vorsatzoptikarray (1) aus einem transparenten Material, vorteilhafterweise anorganischem Glas, einem einstückig gepressten zweiten Vorsatzoptikarray (2) aus dem oder einem transparenten Material, vorteilhafterweise anorganischem Glas, und zumindest einem einstückig gepressten dritten Vorsatzoptikarray (3) aus dem oder einem transparenten Material, vorteilhafterweise anorganischem Glas, wobei der erste Vorsatzoptikarray
- eine erste Vorsatzoptik (11) mit einer Lichteintrittsfläche und einer Lichtaustrittsfläche,
- zumindest eine zweite Vorsatzoptik (12) mit einer Lichteintrittsfläche und einer Lichtaustrittsfläche und
- einen ersten Verbindungssteg (19), der die erste Vorsatzoptik (11) mechanisch mit der zweiten Vorsatzoptik (12) verbindet, umfasst, wobei der zweite Vorsatzoptikarray (2) - eine dritte Vorsatzoptik (21) mit einer Lichteintrittsfläche und einer Lichtaustrittsfläche,
- zumindest eine vierte Vorsatzoptik (22) mit einer Lichteintrittsfläche und einer Lichtaustrittsfläche und
- einen zweiten Verbindungssteg (29), der die dritte Vorsatzoptik (21) mechanisch mit der vierten Vorsatzoptik (22) verbindet, umfasst, wobei der dritte Vorsatzoptikarray (3) eine fünfte Vorsatzoptik (31) mit einer Lichteintrittsfläche und einer Lichtaustrittsfläche,
- zumindest eine sechste Vorsatzoptik (32) mit einer Lichteintrittsfläche und einer Lichtaustrittsfläche und
- einen dritten Verbindungssteg (39), der die fünfte Vorsatzoptik mechanisch mit der sechsten Vorsatzoptik verbindet, umfasst, wobei der erste Vorsatzoptikarray (1), der zweite Vorsatzoptikarray (2) und der dritte Vorsatzoptikarray (3) derart zueinander angeordnet und fixiert sind, dass sie derart ineinander greifen, dass sie einen Array bilden, bei dem
- die erste Vorsatzoptik : (11) zwischen der dritten Vorsatzoptik (21) und der vierten Vorsatzoptik (22) angeordnet ist,
- die zweite Vorsatzoptik (12) zwischen der fünften (31) und der sechsten Vorsatzoptik (32) angeordnet ist und
- die vierte Vorsatzoptik (22) und die fünfte Vorsatzoptik (31) zwischen der ersten Vorsatzoptik (11) und der zweiten Vorsatzoptik (12) angeordnet sind, und wobei
- die erste Vorsatzoptik (11) auf ihrer dem ersten Verbindungssteg (19) abgewandten bzw. gegenüberliegenden Seite einen, insbesondere die Lichtaustrittsfläche der ersten Vorsatzoptik verlängernden, ersten Steg (119) umfasst und/oder
- die zweite Vorsatzoptik (12) auf ihrer dem ersten Verbindungssteg (19) abgewandten bzw. gegenüberliegenden Seite einen, insbesondere die Lichtaustrittsfläche der zweiten Vorsatzoptik verlängernden, zweiten Steg (129) umfasst und/oder
- die dritte Vorsatzoptik (21) auf ihrer dem zweiten Verbindungssteg (29) abgewandten bzw. gegenüberliegenden Seite einen, insbesondere die Lichtaustrittsfläche der dritten Vorsatzoptik verlängernden, dritten Steg umfasst und/oder
- die vierte Vorsatzoptik (22) auf ihrer dem zweiten Verbindungssteg (29) abgewandten bzw. gegenüberliegenden Seite einen, insbesondere die Lichtaustrittsfläche der vierten Vorsatzoptik verlängernden, vierten Steg umfasst und/oder
- die fünfte Vorsatzoptik (31) auf ihrer dem dritten Verbindungssteg (39) abgewandten bzw. gegenüberliegenden Seite einen, insbesondere die Lichtaustrittsfläche der fünften Vorsatzoptik verlängernden, fünften Steg umfasst und/oder
- die sechste Vorsatzoptik (32) auf ihrer dem dritten Verbindungssteg (39) abgewandten bzw. gegenüberliegenden Seite einen, insbesondere die Lichtaustrittsfläche der sechsten Vorsatzoptik verlängernden, sechsten Steg umfasst.

7. Optisches Element nach Anspruch 6, **dadurch gekennzeichnet, dass** der Abstand
- zwischen der ersten Vorsatzoptik und der dritten Vorsatzoptik nicht mehr als 0,5 mm,
- zwischen der ersten Vorsatzoptik und der vierten Vorsatzoptik nicht mehr als 0,5 mm,
- zwischen der zweiten Vorsatzoptik und der fünften Vorsatzoptik nicht mehr als 0,5 mm,
- zwischen der zweiten Vorsatzoptik und der sechsten Vorsatzoptik nicht mehr als 0,5 mm, und/oder
- zwischen der vierten Vorsatzoptik und der fünften Vorsatzoptik nicht mehr als 0,5 mm,
beträgt.

8. Optisches Element nach Anspruch 6 oder 7, **dadurch gekennzeichnet, dass** die erste Vorsatzoptik , die zweite Vorsatzoptik, die dritte Vorsatzoptik, die vierte Vorsatzoptik, die fünfte Vorsatzoptik und/oder die sechste Vorsatzoptik zwischen ihrer Lichteintrittsfläche und ihrer Lichtaustrittsfläche eine blankgepresste Oberfläche, insbesondere zur Totalreflexion von in die Lichteintrittsfläche eingestrahlten Lichts, umfasst.

9. Fahrzeugscheinwerfer, insbesondere Kraftfahrzeugscheinwerfer, **dadurch gekennzeichnet, dass** er ein optisches Element nach einem der vorhergehenden Ansprüche sowie eine, insbesondere eine LED umfassende, Lichtquellenanordnung zur Einkopplung von Licht in die Lichteintrittsfläche(n) aufweist.

## Claims

1. Optical element (100) for a vehicle headlamp, in particular a motor vehicle headlamp, having an integrally pressed first auxiliary optical array (1) of a transparent material, advantageously inorganic glass, and at least one integrally pressed second auxiliary optical array (3) of the or a transparent material, advantageously inorganic glass, wherein the first auxiliary optical array (1) comprises
- a first auxiliary optical system (11) having a light entry surface and a light exit surface,
- at least one second auxiliary optical system (12) having a light entry surface and a light exit surface, and
- a first connection web (19) connecting the first auxiliary optical system (11) mechanically to the second auxiliary optical system (12), wherein the first auxiliary optical system (11) comprises, on its side facing away from or being opposite to the first connection web (19), a first web (119), in particular extending the light exit surface of the first auxiliary optical system (11), wherein the second auxiliary optical system (12) comprises, on its side facing away from or being opposite to the first connection web, a second web (129), in particular extending the light exit surface of the second auxiliary optical system, wherein the second auxiliary optical array (3) comprises
- a third auxiliary optical system (31) having a light entry surface and a light exit surface,
- at least one fourth auxiliary optical system (32) having a light entry surface and a light exit surface, and
- a second connection web (39) that connects the third auxiliary optical system (31) mechanically to the fourth auxiliary optical system (32), and wherein the first auxiliary optical array (1) and the second auxiliary optical array (3) are arranged and fixed with respect to each other such that they engage so as to form an array, wherein
- the second auxiliary optical system (12) is arranged between the third auxiliary optical system (31) and the fourth auxiliary optical system (32), and
- the third (31) is arranged between the first auxiliary optical system (11) and the second auxiliary optical system (12).

2. Optical element according to claim 1, **characterized in that** the first auxiliary optical system, the second auxiliary optical system, the third auxiliary optical system and/or the fourth auxiliary optical system comprise a glass-moulded surface between their light entry surfaces and their light exit surfaces, in particular for the total reflection of light emitted into the light entry surface.

3. Optical element according to claim 1 or 2, **characterized in that** the distance
- between the second auxiliary optical system and the third auxiliary optical system is not more than 0.5 mm,
- between the second auxiliary optical system and the fourth auxiliary optical system is not more than 0.5 mm, and/or
- between the first auxiliary optical system and the third auxiliary optical system is not more than 0.5 mm.

4. Optical element according to claim 1, 2 or 3, **characterized in that** the third auxiliary optical system comprises, on its side facing away from or being opposite to the second connection web, a third web, in particular extending the light exit surface of the third auxiliary optical system.

5. Optical element according to claim 1, 2, 3 or 4, **characterized in that** the fourth auxiliary optical system comprises, on its side facing away from or being opposite to the second connection web, a fourth web, in particular extending the light exit surface of the fourth auxiliary optical system.

6. Optical element (100) for a vehicle headlamp, in particular a motor vehicle headlamp, having an integrally pressed first auxiliary optical array (1) of a transparent material, advantageously inorganic glass, an integrally pressed second auxiliary optical array (2) of the or a transparent material, advantageously inorganic glass, and at least one integrally pressed third auxiliary optical array (3) of the or a transparent material, advantageously inorganic glass, wherein the first auxiliary optical array comprises
- a first auxiliary optical system (11) having a light entry surface and a light exit surface,
- at least one second auxiliary optical system (12) having a light entry surface and a light exit surface, and
- a first connection web (19) connecting the first auxiliary optical system (11) mechanically to the second auxiliary optical system (12), wherein the second auxiliary optical array (2) comprises
- a third auxiliary optical system (21) having a light entry surface and a light exit surface,
- at least one fourth auxiliary optical system (22) having a light entry surface and a light exit surface, and
- a second connection web (29) that connects the third auxiliary optical system (21) mechanically to the fourth auxiliary optical system (22), wherein the third auxiliary optical array (3) comprises
- a fifth auxiliary optical system (31) having a light entry surface and a light exit surface,
- at least one sixth auxiliary optical system (32) having a light entry surface and a light exit surface, and
- a third connection web (39) that connects the fifth auxiliary optical system mechanically to the sixth auxiliary optical system,
wherein the first auxiliary optical array (1). the second auxiliary optical array (2), and the third auxiliary optical array (3) are arranged and fixed with respect to each other such that they engage so as to form an array, wherein
- the first auxiliary optical system (11) is arranged between the third auxiliary optical system (21) and the fourth auxiliary optical system (22),
- the second auxiliary optical system (12) is arranged between the fifth (21) and the sixth auxiliary optical system (32), and
- the fourth auxiliary optical system (22) and the fifth auxiliary optical system (31) are arranged between the first auxiliary optical system (11) and the second auxiliary optical system (12), and wherein
- the first auxiliary optical system (11) comprises, on its side facing away from or being opposite to the first connection web (19), a first web (119), in particular extending the light exit surface of the first auxiliary optical system, and/or
- the second auxiliary optical system (12) comprises, on its side facing away from or being opposite to the first connection web (19), a second web (129), in particular extending the light exit surface of the second auxiliary optical system, and/or
- the third auxiliary optical system (21) comprises, on its side facing away from or being opposite to the second connection web (29), a third web, in particular extending the light exit surface of the third auxiliary optical system, and/or
- the fourth auxiliary optical system (22) comprises, on its side facing away from or being opposite to the second connection web (29), a fourth web, in particular extending the light exit surface of the fourth auxiliary optical system, and/or
- the fifth auxiliary optical system (31) comprises, on its side facing away from or being opposite to the third connection web (39), a fifth web, in particular extending the light exit surface of the fifth auxiliary optical system, and/or
- the sixth auxiliary optical system (32) comprises, on its side facing away from or being opposite to the third connection web (39), a sixth web, in particular extending the light exit surface of the sixth auxiliary optical system.

7. Optical element according to claim 6, **characterized in that** the distance
- between the first auxiliary optical system and the third auxiliary optical system is not more than 0.5 mm,
- between the first auxiliary optical system and the fourth auxiliary optical system is not more than 0.5 mm,
- between the second auxiliary optical system and the fifth auxiliary optical system is not more than 0.5 mm,
- between the second auxiliary optical system and the sixth auxiliary optical system is not more than 0.5 mm, and/or
- between the fourth auxiliary optical system and the fifth auxiliary optical system is not more than 0.5 mm.

8. Optical element according to claim 6 or 7, **characterized in that** the first auxiliary optical system, the second auxiliary optical system, the third auxiliary optical system, the fourth auxiliary optical system, the fifth auxiliary optical system, and/or the sixth auxiliary optical system comprise a glass-moulded surface between their light entry surfaces and their light exit surfaces, in particular for the total reflection of light emitted into the light entry surface.

9. Vehicle headlamp, in particular motor vehicle headlamp, **characterized in that** it comprises an optical element according to one of the preceding claims and a light source arrangement, in particular comprising an LED, for coupling light into the light entry surface(s).

## Revendications

1. Élément optique (100)
pour un phare de véhicule, notamment un phare de véhicule automobile, comportant une première rangée d'optiques additionnelles (1) pressée d'une seule pièce dans une matière transparente, de manière avantageuse en verre anorganique, et comportant au moins une deuxième rangée d'optiques additionnelles (3) pressée d'une seule pièce dans la ou dans une matière transparente, de manière avantageuse en verre anorganique,
dans lequel la première rangée d'optiques additionnelles (1) comprend :
- une première optique additionnelle (11) ayant une surface d'entrée de lumière et une surface de sortie de lumière,
- au moins une deuxième optique additionnelle (12) ayant une surface d'entrée de lumière et une surface de sortie de lumière, et
- une première nervure de liaison (19) qui relie la première optique additionnelle (11) mécaniquement à la deuxième optique additionnelle (12),
dans lequel la première optique additionnelle (11) comprend sur son côté détourné ou opposé à la première nervure de liaison (19) une première nervure (119) prolongeant notamment la surface de sortie de lumière de la première optique additionnelle (11),
dans lequel la deuxième optique additionnelle (12) comprend sur son côté détourné ou opposé à la première nervure de liaison une deuxième nervure (129) prolongeant notamment la surface de sortie de lumière de la deuxième optique additionnelle,
dans lequel la deuxième rangée d'optiques additionnelles (3) comprend :
- une troisième optique additionnelle (31) ayant une surface d'entrée de lumière et une surface de sortie de lumière,
- au moins une quatrième optique additionnelle (32) ayant une surface d'entrée de lumière et une surface de sortie de lumière, et
- une deuxième nervure de liaison (39) qui relie la troisième optique additionnelle (31) mécaniquement à la quatrième optique additionnelle (32),
et dans lequel la première rangée d'optiques additionnelles (1) et la deuxième rangée d'optiques additionnelles (3) sont disposées et fixées de telle manière l'une par rapport à l'autre qu'elles ont prise l'une dans l'autre de sorte qu'elles forment une rangée dans laquelle ;
- la deuxième optique additionnelle (12) est disposée entre la troisième optique additionnelle (31) et la quatrième optique additionnelle (32), et
- la troisième (31) est disposée entre la première optique additionnelle (11) et la deuxième optique additionnelle (12).

2. Élément optique selon la revendication 1, **caractérisé en ce que** la première optique additionnelle, la deuxième optique additionnelle, la troisième optique additionnelle et/ou la quatrième optique additionnelle comprennent entre leur surface d'entrée de lumière et leur surface de sortie de lumière une surface moulée par pressage, notamment pour la réflexion totale de la lumière introduite dans la surface d'entrée de lumière.

3. Élément optique selon la revendication 1 ou 2, **caractérisé en ce que** l'écart
- entre la deuxième optique additionnelle et la troisième optique additionnelle n'est pas plus de 0,5 mm,
- entre la deuxième optique additionnelle et la quatrième optique additionnelle n'est pas plus de 0,5 mm, et/ou
- entre la première optique additionnelle et la troisième optique additionnelle n'est pas plus de 0,5 mm.

4. Élément optique selon les revendications 1, 2 ou 3, **caractérisé en ce que** la troisième optique additionnelle comprend sur son côté détourné ou opposé à la deuxième nervure de liaison une troisième nervure prolongeant notamment la surface de sortie de lumière de la troisième optique additionnelle.

5. Élément optique selon les revendications 1, 2, 3 ou 4, **caractérisé en ce que** la quatrième optique additionnelle comprend sur son côté détourné ou opposé à la deuxième nervure de liaison une quatrième nervure prolongeant notamment la surface de sortie de la quatrième optique additionnelle.

6. Élément optique (100)
pour un phare de véhicule, notamment un phare de véhicule automobile, comportant une première rangée d'optiques additionnelles (1) pressée d'une seule pièce dans une matière transparente, de manière avantageuse en verre anorganique, une deuxième rangée d'optiques additionnelles (3) pressée d'une seule pièce dans la ou dans une matière transparente, de manière avantageuse en verre anorganique, et au moins une troisième rangée d'optiques additionnelles (3) pressée d'une seule pièce dans la ou une matière transparente, de manière avantageuse en verre anorganique, dans lequel la première rangée d'optiques additionnelles comprend :
- une première optique additionnelle (11) ayant une surface d'entrée de lumière et une surface de sortie de lumière,
- au moins une deuxième optique additionnelle (12) ayant une surface d'entrée de lumière et une surface de sortie de lumière, et
- une première nervure de liaison (19) qui relie la première optique additionnelle (11) mécaniquement à la deuxième optique additionnelle (12),
dans lequel la deuxième rangée d'optiques additionnelles comprend (2) :
- une troisième optique additionnelle (21) ayant une surface d'entrée de lumière et une surface de sortie de lumière,
- au moins une quatrième optique additionnelle (22) ayant une surface d'entrée de lumière et une surface de sortie de lumière, et
- une deuxième nervure de liaison (29) qui relie la troisième optique additionnelle (21) mécaniquement à la quatrième optique additionnelle (22),
dans lequel la troisième rangée d'optiques additionnelles (3) comprend :
- une cinquième optique additionnelle (31) ayant une surface d'entrée de lumière et une surface de sortie de lumière,
- au moins une sixième optique additionnelle (32) ayant une surface d'entrée de lumière et une surface de sortie de lumière, et
- une troisième nervure de liaison (39) qui relie la cinquième optique additionnelle mécaniquement à la sixième optique additionnelle,
dans lequel la première rangée d'optiques additionnelles (1), la deuxième rangée d'optiques additionnelles (2) et la troisième rangée d'optiques additionnelles (3) sont disposées et fixées de telle manière les unes par rapport aux autres qu'elles ont prise l'une dans l'autre de manière à former une rangée dans laquelle :
- la première optique additionnelle (11) est disposée entre la troisième optique additionnelle (21) et la quatrième optique additionnelle (22),
- la deuxième optique additionnelle (12) est disposée entre la cinquième (31) et la sixième optique additionnelle (32), et
- la quatrième optique additionnelle (22) et la cinquième optique additionnelle (31) sont disposées entre la première optique additionnelle (11) et la deuxième optique additionnelle (12),
et dans laquelle
- la première optique additionnelle (11) comprend sur son côté détourné ou opposé à la première nervure de liaison (19) une première nervure (119) prolongeant notamment la surface de sortie de lumière de la première optique additionnelle,
et/ou
la deuxième optique additionnelle (12) comprend sur son côté détourné ou opposé à la première nervure de liaison (19) une deuxième nervure (129) prolongeant notamment la surface de sortie de lumière de la deuxième optique additionnelle,
et/ou
- la troisième optique additionnelle (21) comprend sur son côté détourné ou opposé à la deuxième nervure de liaison (29) une troisième nervure prolongeant notamment la surface de sortie de lumière de la troisième optique additionnelle,
et/ou
- la quatrième optique additionnelles (22) comprend sur son côté détourné ou opposé à la deuxième nervure de liaison (29) une quatrième nervure prolongeant notamment la surface de sortie de lumière de la quatrième optique additionnelle,
et/ou
- la cinquième optique additionnelle (31) comprend sur son côté détourné ou opposé à la troisième nervure de liaison (39) une cinquième nervure prolongeant notamment la surface de sortie de lumière de la cinquième optique additionnelle,
et/ou
- la sixième optique additionnelle (32) comprend sur son côté détourné ou opposé à la troisième nervure de liaison (39) une sixième nervure prolongeant notamment la surface de sortie de lumière de la sixième optique additionnelle.

7. Élément optique selon la revendication 6, **caractérisé en ce que** l'écart
- entre la première optique additionnelle et la troisième optique additionnelles n'est pas plus de 0,5 mm,
- entre la première optique additionnelle et la quatrième optique additionnelle n'est pas plus de 0,5 mm,
- entre la deuxième optique additionnelle et la cinquième optique additionnelle n'est pas plus de 0,5 mm,
- entre la deuxième optique additionnelle et la sixième optique additionnelle n'est pas plus de 0,5 mm, et/ou
- entre la quatrième optique additionnelle et la cinquième optique additionnelle n'est pas plus de 0,5 mm.

8. Élément optique selon la revendication 6 ou 7, **caractérisé en ce que** la première optique additionnelle, la deuxième optique additionnelle, la troisième optique additionnelle, la quatrième optique additionnelle, la cinquième optique additionnel et/ou la sixième optique additionnelle comprennent entre leur surface d'entrée de lumière et leur surface de sortie de lumière une surface moulée par pressage, notamment pour la réflexion totale de la lumière introduite dans la surface d'entrée de lumière.

9. Phare de véhicule, notamment phare de véhicule automobile, **caractérisé en ce qu'**il comprend un élément optique selon l'une quelconque des revendications précédentes ainsi qu'un agencement de source de lumière comprenant notamment une LED, pour l'injection de la lumière dans la (les) surface(s) d'entrée de lumière.
